# FASCICULE DE BREVET EUROPEEN

(11) **EP 3 494 028 B1**
(45) Date de publication et mention de la délivrance du brevet: **25.11.2020**
(21) Numéro de dépôt: 17746169.6
(22) Date de dépôt: 06.07.2017
(51) Int. Cl.: B62D 21/15

(54) **ÉLÉMENT DE RENFORT MODULABLE POUR CAISSE DE VÉHICULE AUTOMOBILE POUR LA PROTECTION EN CAS DE CHOC ARRIÈRE OU DE CHOC LATÉRAL**
VERSTELLBARES VERSTÄRKUNGSELEMENT FÜR EINE KRAFTFAHRZEUGKAROSSERIE ZUM SCHUTZ BEI EINEM HECKAUFPRALL ODER SEITENAUFPRALL
ADJUSTABLE REINFORCING ELEMENT FOR A MOTOR VEHICLE BODY FOR PROTECTION IN CASE OF A REAR IMPACT OR SIDE IMPACT

(30) Priorité: 02.08.2016 FR 1657487
(43) Date de publication de la demande: 12.06.2019
(73) Titulaire: PSA Automobiles SA, 78300 Poissy (FR)
(72) Inventeur: PERU, Marc, 92290 Chatenay-Malabry (FR); ZEITOUNI, Richard, 78390 Bois d'Arcy (FR)
(86) Numéro de dépôt international: PCT/FR2017/051838
(87) Numéro de publication internationale: WO 2018/024954

(56) Documents cités:
- WO-A1-2012/086297
- DE-A1-102013 203 504
- US-A1- 2008 111 048
- US-A1- 2014 191 105
- US-A1- 2014 333 091
- US-A1- 2014 333 091

## Description

L'invention s'inscrit dans le domaine des caisses de véhicule automobile, en particulier les véhicules automobiles électriques ou hybrides.

Ces véhicules nécessitent d'être protégés en cas de choc, notamment de choc par l'arrière, ou de choc latéral.

On s'intéresse notamment à la protection contre les chocs arrière dits « décalé 70% », par exemple à une vitesse de 80 km/h ou grande vitesse. Il s'agit d'un choc à haute énergie. On s'intéresse aussi à la classe de chocs dit « choc latéral poteau (centré sur l'arrière) ». Il s'agit d'un choc très intrusif. Ces catégories de choc sont non limitatives aux fins de la présente divulgation, mais sont évoquées à titre illustratif.

Il est souhaité que les véhicules soient bien protégés en cas de choc, mais conservent néanmoins une silhouette allégée. On souhaite développer des véhicules à propulsion hybride ou électrique utilisant les côtes d'unités arrière compactes, avec un empattement augmenté et un porte-à-faux arrière réduit, et/ou reprenant des trains arrière système de suspension arrière) existant. On s'intéresse aussi à utiliser des systèmes de train arrière économiques (train arrière à traverse déformable, notamment).

Dans le cas de la réutilisation d'un train arrière à traverse déformable, pour lequel on souhaite reprendre la caisse, il convient d'ajouter, pour un véhicule électrique deux modules de batterie, devant et derrière le train, sous la caisse du véhicule, et pour un véhicule hybride, un module de batterie à l'arrière du train et un réservoir à carburant à l'avant du train. Ces éléments, placés de part en part du véhicule doivent être protégés en cas de choc arrière ou de choc latéral.

Pour satisfaire à ces nouvelles contraintes, l'état de l'art consiste à renforcer les conceptions existantes au niveau de la tenue du soubassement. Par exemple, on peut insérer un longeronnet central pour les chocs arrière, ou un renfort de longeron continu et un renfort interne pour choc latéral : ceci se traduit par une augmentation de la masse de la structure, mais aussi par la remise en cause de l'unité arrière, ce qui implique des investissements coûteux pour une nouvelle installation industrielle. Cela implique aussi une masse plus élevée.

On connait de WO201286297 une structure de carrosserie avec flambage contrôlé d'un cadre support de batterie. Mais le cadre support n'est pas configuré pour rigidifier la structure et permettre la mise en mouvement du véhicule en cas de choc arrière. Le document DE 10 2013 203 504 A1 a pour objectif, suite à un choc avant de provoquer une rotation de la roue avant vers une position de pincement, résultat d'une déformation d'une partie de l'avant du véhicule. Le document EP 2990 307 A2 décrit le préambule de la première revendication et propose un élément de renfort sous forme de sous-structure rigide fixé à l'arrière du véhicule.

On a donc cherché à concevoir un système qui satisfasse aux contraintes précédentes sans présenter les défauts évoqués.

Il est proposé dans ce contexte un élément de renfort pour caisse de véhicule automobile, l'élément de renfort comprenant des moyens de protection contre le choc par l'arrière du véhicule, caractérisé en ce qu'il comprend au moins deux tubes à positionner globalement dans la direction de la longueur du véhicule et à fixer à la caisse ainsi qu'une surface rigide de contact comprenant des impacteurs, la surface rigide de contact étant agencée vis-à-vis des deux tubes pour permettre la mise en mouvement du véhicule en cas de choc par l'arrière, l'élément de renfort comprenant de plus des moyens d'absorption d'énergie en saillie vis-à-vis de la surface rigide de contact et à positionner vers l'arrière du véhicule, en sorte que les impacteurs n'entrent en fonction pour ladite mise en mouvement que si les moyens d'absorption d'énergie ont été sollicités et surmontés par un tel choc par l'arrière.

L'invention peut comprendre aussi les caractéristiques suivantes, optionnelles et avantageuses :
- une structure de protection pour une batterie ou un réservoir à carburant pouvant être présent sous la caisse du véhicule ;
- pour chaque côté du véhicule, une surface rigide de contact dirigée vers le côté pour absorber l'énergie d'un éventuel choc latéral ;
- un moyen de fixation à la caisse réglable pour s'adapter à l'empattement du véhicule ;
- trois tubes à positionner globalement dans la direction de la longueur du véhicule, pour rigidifier l'élément de renfort et transmettre l'énergie vers l'avant ; ces trois tubes à positionner globalement dans la direction de la longueur du véhicule, comprennent par exemple deux tubes à placer entre un train arrière et la caisse, et un troisième tube, intermédiaire entre lesdits deux tubes, étant en sorte que le train arrière soit à placer entre la caisse et ledit troisième tube ;
- sur au moins un des tubes, un moyen de fixation au fond de caisse, à l'opposé de la surface rigide de contact.

L'élément de renfort peut être constitué de tubes en acier ou en aluminium.

Il est proposé aussi un véhicule automobile à train arrière à traverse déformable, caractérisé en ce qu'il comprend de plus un élément de renfort selon l'invention.

Ce véhicule automobile peur comprendre une première batterie sous la caisse et derrière le train arrière et respectivement une deuxième batterie ou un réservoir à carburant sous la caisse et devant le train arrière, la première batterie et respectivement la deuxième batterie ou le réservoir à carburant étant protégés par l'élément de renfort.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant des modes de réalisation de l'invention et dans lesquels :
- la figure 1 présente une première version d'un élément de renfort selon l'invention, mise en place sur un véhicule électrique ;
- la figure 2 présente la même version, mais mise en place sur un véhicule hybride ;
- la figure 3 présente une deuxième version, sur un véhicule hybride ;
- la figure 4 présente une troisième version sur un véhicule hybride équipé de deux batteries.

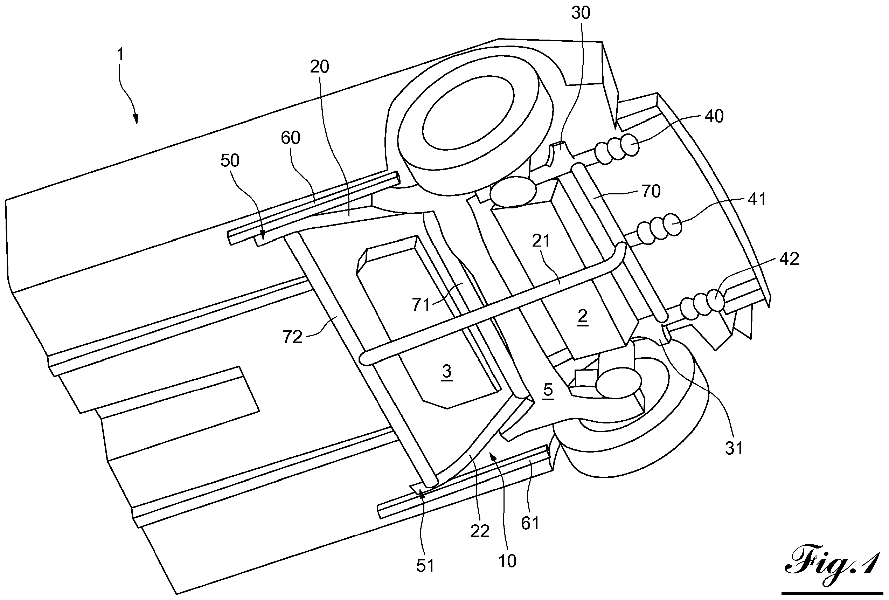

En figure 1 on a représenté la partie arrière de la caisse 1 d'un véhicule automobile, vue du dessous. On visualise en particulier les batteries 2 et 3 placées sous la surface intérieure de la caisse, en travers du véhicule, de part et d'autre du train arrière 5. Il s'agit d'un train arrière à traverse déformable, qui a l'avantage d'être économique.

Le véhicule est équipé d'un élément de renfort 10 sous la forme d'un agencement de tubes soudés les uns aux autres. Il comprend notamment des tubes longitudinaux 20, 21 et 22, à gauche du véhicule, au milieu du véhicule et à droite du véhicule. Le tube 21, intermédiaire entre les tubes 20 et 22, est placé en sorte que les batteries 2 et 3 et le train 5 soient placés entre la caisse 1 et le tube 21. Les tubes 20 et 22 sont quant à eux placés en sorte d'être placés entre le train 5 et la caisse 1.

Vers l'arrière, l'élément de renfort 10 comprend deux impacteurs 30 et 31 latéraux constituant une surface de contact rigide, ayant une fonction de barrière, pour la mise en mouvement du véhicule en cas de choc par l'arrière. Ces deux structures 30 et 31 sont à la même position de chacun des deux côtés de la caisse. Elles sont reliées par un tube de la structure, qui sera évoquée plus loin.

Encore plus vers l'arrière, l'élément de renfort 10 comprend trois absorbeurs 40, 41 et 42 ayant un rôle d'absorption d'énergie en cas de choc arrière. Ils sont en mesure de se déformer pour assurer un rôle de tampon, et éviter que le reste du véhicule reçoive une trop grande énergie. Ils sont montés sur des tubes coulissants pour que leur longueur soit adaptée au porte-à-faux arrière du véhicule sur lequel l'élément de renfort est monté. Ils sont en saillie par rapport à la surface rigide définie par les impacteurs 30 et 31 et le tube les reliant. Ils sont à positionner vers l'arrière du véhicule.

Les impacteurs 30 et 31 n'entrent en fonction que si les absorbeurs 40, 41 et 42 ont été sollicités et surmontés, de par un choc fortement énergétique.

L'élément de renfort 10 comporte deux zones de fixation 50 et 51, respectivement à gauche et à droite du véhicule. Elles permettent, à l'aide par exemple d'un système vis écrou, la fixation du cadre tubulaire, ou élément de renfort, à la caisse et son réglage selon l'empattement du véhicule. Ces zones de fixation sont essentiellement à l'extrémité des tubes longitudinaux 20 et 22.

L'élément de renfort 10 comporte aussi des barres latérales 60 et 61, fixées aux tubes longitudinaux 20 et 22, et s'étendant le long du côté de la caisse, pour servir de renfort en cas de choc latéral. Elles constituent des surfaces de contact rigides, dirigées vers le côté pour absorber l'énergie d'un choc latéral.

L'élément de renfort 10 comporte aussi des tubes transversaux pour maintenir ses différents éléments entre eux. Il y a un tube transversal arrière 70, reliant les tubes longitudinaux entre eux au niveau de leurs extrémités arrière, à la hauteur des impacteurs 30 et 31. Il y a un tube transversal avant 72, reliant les tubes longitudinaux entre eux au niveau de leurs extrémités avant, et un tube transversal intermédiaire 71, reliant lui aussi les trois tubes longitudinaux.

Ainsi, on dispose d'un cadre tubulaire optimisé, ou élément de renfort 10, s'apparentant à une ossature, et agissant pour la protection contre le choc arrière et le choc latéral. Il renforce la structure en la rigidifiant. Il est constitué de tubes en acier ou de profilés en aluminium. Les tubes sont agencés pour constituer une structure de protection pour une batterie ou un réservoir de carburant présent sous la caisse, ou plusieurs batteries et réservoirs de carburant.

Les tubes longitudinaux 20, 21 et 22 sont positionnés globalement dans la direction de la longueur du véhicule, et, avec la surface rigide de contact dirigée vers l'arrière constituée par les impacteurs 30 et 31 et le tube transversal 70 les reliant, de par leur agencement réciproque (par soudure ou tout autre moyen d'immobilisation rigide des tubes les uns par rapport aux autres), permettent la mise en mouvement du véhicule en cas de choc par l'arrière.

Il provoque une mise en déplacement plus rapide du véhicule en cas de choc arrière, grâce à sa raideur générale et à la fonction apportée par les impacteurs 30 et 31, servant, conjugués au tube transversal arrière 70, de dispositif de poussée grâce à leur surface de contact, ce qui permet d'éviter qu'une trop grande énergie doive être absorbée dans le véhicule. Le cadre tubulaire optimisé, ou élément de renfort, permet de plus de disposer d'une capacité d'absorption d'énergie en cas de choc latéral pour protéger les organes de la batterie. Enfin, il s'adapte à plusieurs implantations et est réglage selon l'empattement et le porte-à-faux de la silhouette du véhicule.

Au final, cet élément de renfort 10 améliore la protection du véhicule et est réglable selon le véhicule. S'agissant d'une structure tubulaire, la consommation d'acier est maintenue modeste. On peut gagner par exemple 5 kg d'acier par rapport à un système classique comprenant des renforcements non tubulaires.

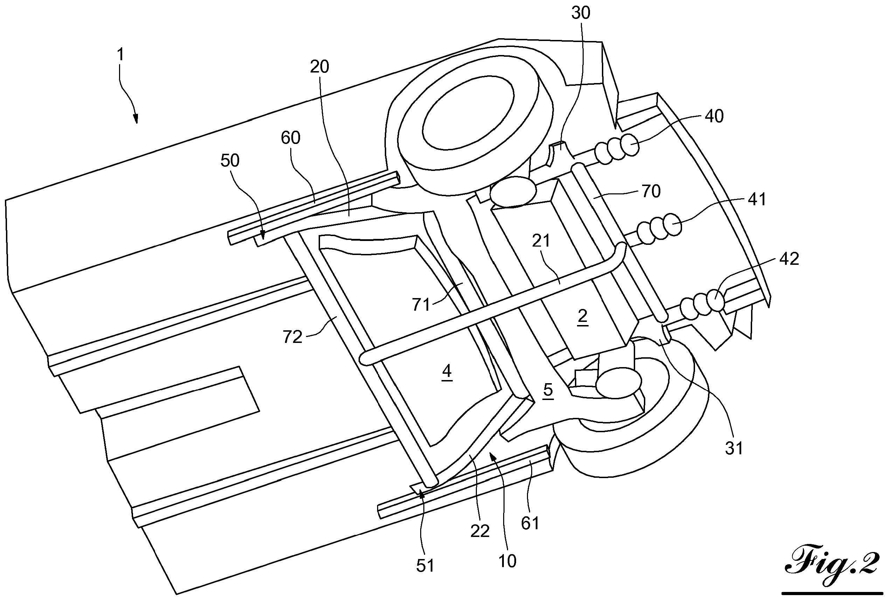

La figure 2 montre que la structure de la figure 1 s'adapte très facilement sur un véhicule comprenant, au lieu de deux batteries 2 et 3 (figure 1), une batterie 2 derrière le train 5, et un réservoir de carburant 4 devant le train 5. Le réservoir 4 est plus volumineux que la batterie 3 mais l'élément de renfort 10 est adapté pour s'adapter à son encombrement et le protéger.

Grâce à cette première version de l'élément de renfort, les organes fragiles (batteries et réservoir à carburant) sont protégés en cas de choc arrière ou de choc latéral contre un poteau.

Éventuellement, l'unité arrière de la caisse peut être allégée par rapport à l'unité de référence à partir de laquelle on développe le modèle, puisque l'élément de renfort 10 la renforce.

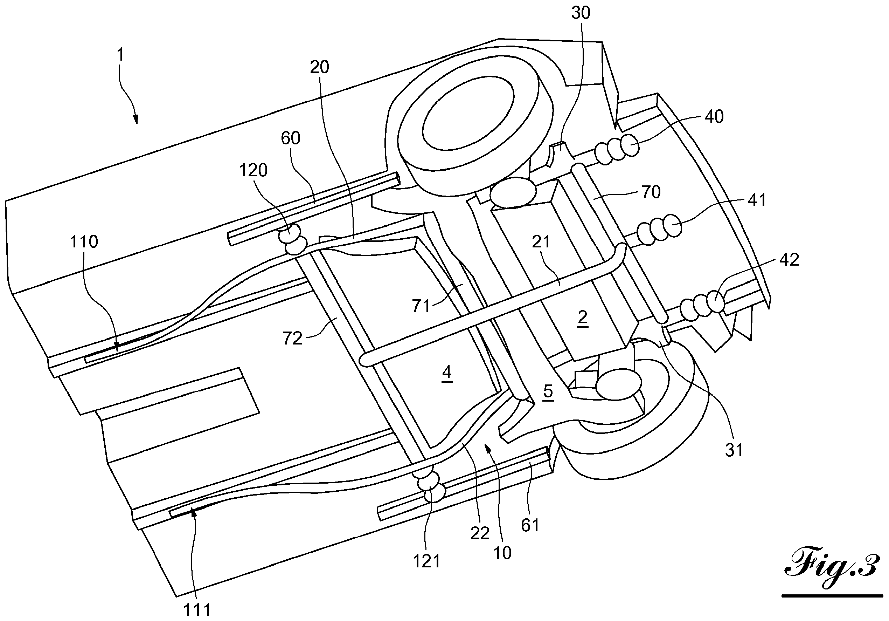

La figure 3 montre une variante, dérivée de la figure 1, dans laquelle les tubes longitudinaux 20 et 22 sont prolongés vers l'avant du véhicule. Les tubes 20 et 22 sont fixés par des zones de fixation 110 et 111 sur le brancard sous plancher ou fond de caisse du véhicule, par tout système par exemple un système vis-écrou. Les tubes 20 et 22 sont éventuellement aplatis à la hauteur de la fixation. Ils ne sont pas fixés par les zones de fixation précédemment décrites 50 et 51 (figure 1).

Le tube transversal avant 72 est à distance de l'extrémité des tubes longitudinaux 110 et 111, et à proximité du réservoir de carburant 4, ou du tube transversal intermédiaire 71.

L'élément de renfort 10, dans cette variante, comporte des absorbeurs latéraux 120 et 121, à hauteur du tube transversal avant 72, fixés aux tubes longitudinaux 20 et 22, disposés horizontalement et tournés vers l'extérieur du véhicule. Les barres latérales 60 et 61 sont portées par ces absorbeurs latéraux 120 et 121. Les absorbeurs latéraux 120 et 121 constituent une zone déformable d'absorption d'énergie en cas de choc latéral contre un poteau par l'arrière. Ils protègent la batterie 2 et le réservoir 4.

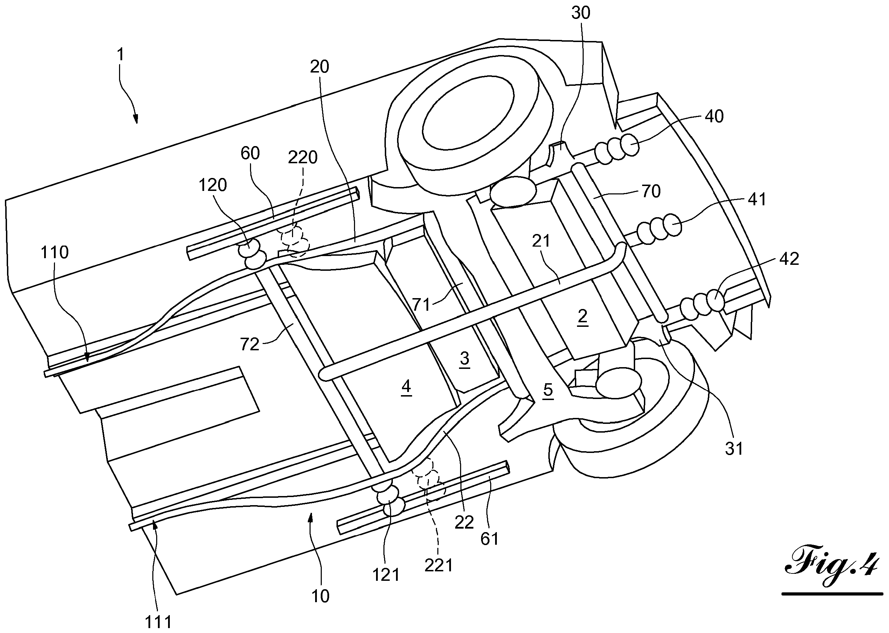

En figure 4, on a représenté une autre variante, dérivée de celle de la figure 3. Dans cette variante, les tubes longitudinaux 20, 21 et 22 sont tous les trois allongés, de telle sorte à accommoder la présence, à l'avant du train 5, d'à la fois une batterie 3 et un réservoir 4, constituant un volume d'organes plus important. Ils sont tous les deux placés sous la caisse, le réservoir 4 étant plus en avant que la batterie 3. Le tube transversal 72 est déplacé vers l'avant, ainsi que les absorbeurs latéraux 120 et 121.

Il est possible d'ajouter des absorbeurs latéraux 220 et 221 en doublon vis-à-vis des absorbeurs 120 et 121 déjà évoqués, entre les tubes longitudinaux 20 et 22 et les barres latérales 60 et 61. Cela permet d'absorber l'énergie dans le cas du choc violent avec un poteau latéral, par exemple si le véhicule est lourd.

On précise que l'élément de renfort 10 évite au train arrière 5 de subir un choc ou un impact lors des chocs arrière, ce qui permet alors d'utiliser un train arrière 5 plus économique, comme un train à traverse déformable.

L'élément de renfort 10 a une utilisation modulable, puisqu'il s'adapte à des caisses comportant des batteries ou des réservoirs, en nombre variable, et qu'il s'adapte à des caisses de différentes dimensions (porte à faux et empattement)

## Revendications

1. Élément de renfort (10) pour caisse (1) de véhicule automobile, l'élément de renfort comprenant des moyens de protection (30, 31, 40, 41, 42) contre le choc par l'arrière du véhicule, **caractérisé en ce qu'**il comprend au moins deux tubes (20, 22) à positionner globalement dans la direction de la longueur du véhicule et à fixer à la caisse (1), ainsi qu'une surface rigide de contact (30, 31, 70) comprenant des impacteurs (30, 31), la surface rigide de contact (30, 31, 70) étant agencée vis-à-vis des deux tubes (20, 22) pour permettre la mise en mouvement du véhicule en cas de choc par l'arrière, l'élément de renfort comprenant de plus des moyens d'absorption d'énergie (40, 41, 42) en saillie vis-à-vis de la surface rigide de contact (30, 31, 70) et à positionner vers l'arrière du véhicule, en sorte que les impacteurs (30, 31) n'entrent en fonction pour ladite mise en mouvement que si les moyens d'absorption d'énergie (40, 41, 42) ont été sollicités et surmontés par un tel choc par l'arrière.

2. Élément de renfort selon la revendication 1, **caractérisé en ce qu'**il constitue une structure de protection pour une batterie ou un réservoir à carburant pouvant être présent sous la caisse du véhicule.

3. Élément de renfort selon la revendication 1 ou la revendication 2, **caractérisé en ce qu'**il comprend, pour chaque côté du véhicule, une surface rigide de contact (60, 61) dirigée vers le côté pour absorber l'énergie d'un choc latéral.

4. Élément de renfort selon l'une des revendications 1 à 3, **caractérisé en ce qu'**il comprend trois tubes (20, 21, 22) à positionner globalement dans la direction de la longueur du véhicule, dont deux tubes (20, 22) sont à placer entre un train arrière (5) du véhicule et la caisse (1), et un troisième tube (21), intermédiaire entre lesdits deux tubes, étant en sorte que le train arrière (5) soit à placer entre la caisse (1) et ledit troisième tube (21).

5. Élément de renfort selon l'une des revendications 1 à 4, **caractérisé en ce qu'**il comporte un moyen de fixation (50, 51) pour fixation à la caisse réglable pour s'adapter à l'empattement du véhicule.

6. Élément de renfort selon l'une des revendications 1 à 4, **caractérisé en ce qu'**il comprend sur au moins un des tubes, un moyen de fixation (110, 111) au fond de caisse.

7. Élément de renfort selon l'une des revendications 1 à 6, **caractérisé en ce qu'**il est essentiellement constitué de tubes en acier ou en aluminium.

8. Véhicule automobile à train arrière (5) à traverse déformable, **caractérisé en ce qu'**il comprend de plus un élément de renfort (10) selon l'une des revendications 1 à 7.

9. Véhicule automobile selon la revendication 8, **caractérisé en ce qu'**il comprend une première batterie (2) sous la caisse et derrière le train arrière (5), et respectivement une deuxième batterie (3) ou un réservoir à carburant (4) sous la caisse et devant le train arrière (5), la première batterie et respectivement la deuxième batterie ou le réservoir à carburant étant protégés par l'élément de renfort (10).

## Patentansprüche

1. Verstärkungselement (10) für einen Kraftfahrzeugkasten (1), wobei das Verstärkungselement Mittel (30, 31, 40, 41, 42) zum Schutz gegen Aufprall von hinten umfasst, **dadurch gekennzeichnet, dass** es mindestens zwei Rohre (20, 22) umfasst, die im Wesentlichen in Längsrichtung des Fahrzeugs zu positionieren und am Kasten (1) zu befestigen sind sowie eine starre Kontaktfläche (30, 31, 70) mit Anschlussstücken (30, 31), wobei die starre Kontaktfläche (30, 31, 70) gegenüber den beiden Rohren (20, 22) angeordnet ist, um die Bewegung des Fahrzeugs bei einem Heckaufprall zu ermöglichen, wobei das Verstärkungselement zusätzlich Folgendes umfasst: Energieabsorbierendes Mittel (40, 41, 42), das von der starren Kontaktfläche (30, 31, 70) vorsteht und nach hinten am Fahrzeug positioniert werden soll, sodass die Impaktoren (30, 31) nur dann in Funktion treten, wenn die Energieabsorptionsmittel (40, 40) für die Bewegung in Kraft treten 1, 42) von einem solchen Heckaufprall gefordert und überwunden wurden.

2. Versteifungselement nach Anspruch 1, **dadurch gekennzeichnet, dass** es eine Schutzstruktur für eine unter dem Fahrzeugaufbau vorhandene Batterie oder einen Kraftstoffbehälter bildet.

3. Verstärkungselement nach Anspruch 1 oder Anspruch 2, **dadurch gekennzeichnet, dass** es für jede Seite des Fahrzeugs eine steife Kontaktfläche (60, 61) aufweist, die zur Seite gerichtet ist, um die Energie eines Seitenaufpralls zu absorbieren.

4. Verstärkungselement nach einem der Ansprüche 1 bis 3, **dadurch gekennzeichnet, dass** es drei Rohre (20, 21, 22) umfasst, die im Wesentlichen in der Längsrichtung des Fahrzeugs zu positionieren sind, von denen zwei Rohre (20, 22) zwischen einem hinteren Fahrwerk (5) des Fahrzeugs und dem Kasten (1) und ein drittes Rohr (21) zwischen den beiden angeordnet sind, wobei der Hinterzug (5) zwischen dem Kasten (1) und dem dritten Rohr (21) anzuordnen ist.

5. Verstärkungselement nach einem der Ansprüche 1 bis 4, **dadurch gekennzeichnet, dass** es ein Befestigungsmittel (50, 51) zur Befestigung an der verstellbaren Karosserie zur Anpassung an den Fahrzeugstand aufweist.

6. Verstärkungselement nach einem der Ansprüche 1 bis 4, **dadurch gekennzeichnet, dass** es an mindestens einem der Rohre ein Befestigungsmittel (110, 111) am Kastenboden aufweist.

7. Verstärkungselement nach einem der Ansprüche 1 bis 6, **dadurch gekennzeichnet, dass** es im Wesentlichen aus Stahl- oder Aluminiumrohren besteht.

8. Kraftfahrzeug mit einem Hinterzug (5) mit verformbarem Querträger, **dadurch gekennzeichnet, dass** es ferner ein Verstärkungselement (10) nach einem der Ansprüche 1 bis 7 umfasst.

9. Kraftfahrzeug nach Anspruch 8, **dadurch gekennzeichnet, dass** es eine erste Batterie (2) unter der Karosserie und hinter der Hinterachse (5) bzw. eine zweite Batterie (3) bzw. einen Kraftstofftank (4) unter der Karosserie und vor der Hinterachse (5) umfasst, wobei die erste Batterie bzw. die zweite Batterie bzw. der Kraftstofftank durch das Verstärkungselement (10) geschützt sind.

## Claims

1. Reinforcement element (10) for motor vehicle body (1) means the reinforcement element comprising means of protection (30, 31, 40, 41, 42) against the rear impact of the vehicle, characterized as it includes at least two tubes (20, 22) to be positioned globally in the direction of the vehicle length and to be attached to the body (1), and a rigid surface of contact (30, 31, 70) comprising impactors (30, 31), the rigid surface of contact (30, 31, 70) being arranged opposite the two tubes (20, 22) to allow the vehicle to move in the event of a rear impact, the reinforcement element comprising in addition to the means of energy absorption (40, 41, 42) protruding to the rigid surface of contact (30, 31, 70) and to position to the rear of the vehicle, so that impactors (30, 31) can only be used for such activation if the means of energy absorption (40, 41, 42) were requested and overcome by such a shock from the rear.

2. Reinforcement element according to Claim 1, characterized as a protective structure for a battery or fuel tank that may be present under the vehicle body.

3. Reinforcement element according to Claim 1 or Claim 2, characterized as it includes, for each side of the vehicle, a rigid contact surface (60, 61) directed towards the side to absorb the energy of a side shock.

4. Reinforcement element according to one of the claims 1 to 3, **characterized in that** it consists of three tubes (20, 21, 22) to be positioned globally in the direction of the vehicle length, of which two tubes (20, 22) are to be placed between a rear train (5) of the vehicle and the body (1), and a third tube (21), intermediate between the two tubes, being in kind that the rear gear (5) be placed between the box (1) and the third tube (21).

5. Reinforcement element according to one of the claims 1 to 4, **characterized in that** it includes a means of fixing (50, 51) for fastening to the adjustable body to fit the wheelbase of the vehicle.

6. A reinforcement element according to one of the claims 1 to 4, characterized as it includes on at least one of the tubes a means of attachment (110, 111) to the bottom of the body.

7. A reinforcement element according to one of the claims 1 to 6, characterized as it is essentially made of steel or aluminum tubes.

8. Rear-wheel (5) deformable-crossed motor vehicle, **characterized in that** it also includes a reinforcement element (10) according to one of the claims 1 to 7.

9. Motor vehicle according to claim 8, characterized as it includes a first battery (2) under the body and behind the rear train (5), and a second battery (3) or a fuel tank (4) under the body and in front of the rear train (5), the first battery and the second battery or fuel tank respectively being protected by the reinforcement element (10).
